(19) Europäisches Patentamt
European Patent Office
Office européen des brevets

(11) **EP 0 846 945 B1**

(12) **EUROPÄISCHE PATENTSCHRIFT**

(45) Veröffentlichungstag und Bekanntmachung des Hinweises auf die Patenterteilung:
**19.06.2002 Patentblatt 2002/25**

(51) Int Cl.[7]: **G01M 17/007**

(21) Anmeldenummer: **97890238.5**

(22) Anmeldetag: **27.11.1997**

(54) **Verfahren und Vorrichtung zur Analyse des Fahrverhaltens von Kraftfahrzeugen**

Procedure and apparatus for analysing the driving behaviour of vehicles

Procédé et dispositif d'analyse du comportement de conduite de véhicules

(84) Benannte Vertragsstaaten:
**AT DE ES FR GB IT SE**

(30) Priorität: **03.12.1996 AT 70996**
**03.07.1997 AT 41197**

(43) Veröffentlichungstag der Anmeldung:
**10.06.1998 Patentblatt 1998/24**

(73) Patentinhaber: **AVL List GmbH**
**8020 Graz (AT)**

(72) Erfinder:
• **List, Helmut, Prof. Dipl.-Ing.**
**8010 Graz (AT)**

• **Schöggl, Peter, Dipl.-Ing.Dr.**
**8054 Seiersberg (AT)**

(74) Vertreter: **Babeluk, Michael, Dipl.-Ing. Mag.**
**Patentanwalt**
**Mariahilfer Gürtel 39/17**
**1150 Wien (AT)**

(56) Entgegenhaltungen:
**DE-B- 2 752 262**      **US-A- 4 169 370**
**US-A- 4 413 522**      **US-A- 4 969 212**
**US-A- 5 060 174**

**Beschreibung**

Die vorliegende Erfindung betrifft ein Verfahren und eine Vorrichtung zur Analyse des Fahrverhaltens von Kraftfahrzeugen.

Zielgrößen bei der Entwicklung und Optimierung des Antriebssystems von Kraftfahrzeugen sind Emissionsverhalten, Verbrauch, Leistung und die Fahrbarkeit bzw. Driveability. Allgemein wird unter Driveability eine subjektive Empfindung von Fahrern verstanden, die besonders mit dem Verhalten des Fahrzeugs in transienten Betriebszuständen zusammenhängt. Bei einem schnellen Niederdrücken des Gaspedals eines Fahrzeugs wird es als angenehm empfunden, wenn die Beschleunigung schnell und ruckfrei einsetzt. Ähnliches gilt für andere transiente Betriebszustände, wie etwa plötzlicher Wechsel in den Schubbetrieb oder die Beendigung des Schubbetriebs. Verzögerungen, Unregelmäßigkeiten oder Schwankungen in den Reaktionen des Fahrzeugs auf vom Fahrer induzierte Änderungen werden von diesem zumeist als störend empfunden. Beispiele dafür sind Ruckelschwingungen, Ansprechverzögerungen, Oszillationen der Drehahl oder Zugkraftschwankungen. Positiv wird eine gute Gasannahme empfunden sowie eine entsprechende Durchzugskraft oder ein ruhiger und stabiler Leerlauf. Die Fahrbarkeit wird durch das Motormanagement wesentlich beeinflußt, aber auch durch die Aufhängung des Motors und die gesamte Gestaltung des Antriebsstranges. Da man versucht, durch Beeinflussung des Motormanagements niedrige Verbrauchswerte und eine günstige Abgasemission zu erzielen, muss als zusätzliche Zielgröße die Erhaltung oder Steigerung der Fahrbarkeit berücksichtigt werden.

Problematisch ist dabei jedoch, dass die objektive und reproduzierbare Bestimmung der Fahrbarkeit in der Praxis wesentlich schwieriger ist als die Bestimmung des Kraftstoffverbrauchs oder der Schadstoffemissionen. Erschwerend kommt hinzu, dass in frühen Phasen der Kraftfahrzeugentwicklung Versuchsfahrzeuge normalerweise nicht verfügbar sind, weshalb transiente Motormanagementfunktionen am dynamischen Motorprüfstand optimiert werden müssen. Zuverlässige Aussagen über die Fahrbarkeit konnten dabei bisher jedoch nicht erhalten werden.

Mit einem bekannten Verfahren kann im Testbetrieb an einem realen Fahrzeug bei vorgegebener Einstellung des Motormanagements eine Beurteilung gewonnen werden. In der Praxis ist es jedoch nicht durchführbar, eine Vielzahl verschiedener Motoreinstellungen auf diese Weise zu untersuchen. Die Übertragung auf einen Prüfstand gestaltet sich jedoch schwierig, da es derzeit noch nicht möglich ist, den Antriebsstrang eines Fahrzeugs am Prüfstand so genau zu simulieren, dass zuverlässige Aussagen über die Fahrbarkeit gewonnen werden.

Daher konnte bisher erst in späteren Fahrzeugentwicklungsphasen eine Fahrbarkeitsbewertung auf subjektiver Basis mit erfahrenen Versuchsfahrern durchgeführt werden. Mit zeitaufwendigen Messroutinen wurden dabei nacheinander fahrbarkeitsrelevante Fahrzustände gefahren und das Fahrzeugverhalten anhand von Formblättern bewertet. Aufgrund des subjektiven Charakters ist die Reproduzierbarkeit solcher Bewertungen allerdings beschränkt.

Aus der US 4,169,370,A ist ein Verfahren und eine Vorrichtung zur frequenzselektiven Erfassung von Schwingungen im Kraftfahrzeug bekannt. Die Vorrichtung besteht im wesentlichen aus einem Beschleunigungssensor, einem Bandpassfilter mit einer fest eingestellten Mittenfrequenz von etwa 4 Hz sowie einer Auswerteeinheit, die den quadratischen Mittelwert bildet. Es kann zwar das subjektive menschliche Schwingungsempfinden für eine Frequenz von etwa 4 Hz näherungsweise simuliert werden, andere Frequenzen sowie andere Einflussgrößen auf die Fahrbarkeit werden allerdings nicht berücksichtigt. Es läßt sich somit keine vollständige Beurteilung über die Fahrbarkeit durchführen. Dies hat seinen Grund unter anderem darin, dass das Auftreten bestimmter Schwingungen je nach der augenblicklichen Fahrsituation von dem Fahrer eines Fahrzeugs völlig unterschiedlich beurteilt wird.

Eine weitere Beschränkung ist, dass das bekannte Verfahren samt Einrichtung auf den Einsatz in Testfahrzeugen beschränkt ist. Prüfstandsuntersuchungen sind damit nicht möglich.

Ein ähnliches Verfahren ist auch aus der US 4,413,522 A bekannt. Bei diesem Verfahren wird durch Frequenzanalyse von Innengeräuschen und durch Spektralanalyse von Beschleunigungskomponenten ein Index ermittelt, der die Unannehmlichkeit eines Passagiers ausdrücken soll. Auch hier kann die Abhängigkeit von menschlichen Empfindungen vom jeweiligen Fahrzustand nicht abgebildet werden.

Ferner betrifft die DE 27 52 262 B ein Messgerät für die Wahrnehmungsstärke von Schwingungen. Aus den gleichen Gründen, wie oben beschrieben, kann ein solches Messgerät für sich allein genommen keine intersubjektiv zuverlässige Aussage über das Fahrverhalten eines Kraftfahrzeuges treffen.

Aufgabe der vorliegenden Erfindung ist es, ein Verfahren und eine Vorrichtung zur Analyse des Fahrverhaltens und insbesonders von Fahrzeugschwingungen anzugeben, durch das die Fahrbarkeit (Driveability) zuverlässig und reproduzierbar bestimmt werden kann, ohne alle Untersuchungen am realen Fahrzeug durchführen zu müssen.

Erfindungsgemäß umfaßt dieses Verfahren die Schritte der Patentansprüche 1 oder 4, die Vorrichtung die Elemente des Patentanspruche 11.

Im ersten Schritt des Verfahrens, wird ein Versuchsfahrer im realen Fahrzeug einem Testbetrieb unterzogen, wobei an sich kein genau vordefinierter Fahrzyklus eingehalten werden muss. Es sollte jedoch der im Versuch durchgeführte Fahrzyklus im wesentlichen einem normalen Fahrbetrieb entsprechen. Motorbezogene und fahrzeugbezogene Daten werden dabei als Zeitreihen während des Fahrbetriebes aufgezeichnet. Als motorbezogene Daten kommen insbesonders in Frage: Motordrehzahl, Drosselklappen- bzw. Gaspedalstellung, Saugrohrunterdruck, Kühlmitteltemperatur, Zündzeitpunkt, Einspritzmenge, Lambda-Wert, Abgasrückführrate und Abgastemperatur. Als fahrzeugbezogene Werte kann man nennen: Fahrzeuggeschwindigkeit und Fahrzeuglängsbeschleunigung.

Im zweiten Schritt werden anhand von zuvor definierten Triggerbedingungen verschiedene Fahrzustände erkannt. Beispielsweise wird mit "Tip-In" ein Fahrzustand definiert, bei dem, ausgehend von einem Zustand niedriger Drehzahl und kleiner Last, eine plötzliche Öffnung der Drosselklappe erfolgt. Andere Fahrzustände sind beispielsweise Leerlauf, Schaltvorgang oder dgl. Für jeden dieser Fahrzustände werden Triggerbedingungen angegeben, d.h. Konstellationen von verschiedenen Messgrößen, bei deren Auftreten geschlossen wird, dass der betreffende Fahrzustand vorliegt. Bei der Analyse der aufgezeichneten Messdaten kann daher einzelnen Zeitpunkten das Vorliegen eines bestimmten Fahrzustandes zugeordnet werden. So kann beispielsweise bestimmt werden, zu welchen Zeitpunkten der Versuchsfahrt ein Tip-In-Vorgang stattgefunden hat. Zu jedem dieser Zeitpunkte kann dann auf der Basis eines oder mehrerer Messwerte eine Bewertungsgröße definiert werden. Um eine optimale Anpassung dieser Bewertungsgröße an das subjektive Empfinden der Fahrer des Fahrzeugs zu ermöglichen, ist dabei vorzugsweise vorgesehen, dass Aussagen von Versuchspersonen über die Fahrbarkeit des Fahrzeugs mit statistischen Mitteln ausgewertet werden. Die Versuchspersonen werden dabei über das Verhalten des Fahrzeugs in den einzelnen Betriebszuständen detailliert befragt. Die Bewertungsgröße wird in der Folge so ausgewählt, dass sie die Bewertung durch die Versuchspersonen möglichst gut widerspiegelt. Es ist auch möglich, die Unterteilung der Betriebszustände weiter zu verfeinern, indem zu jedem Betriebszustand auch der jeweils davor herrschende Betriebszustand berücksichtigt wird, da auch dieser einen Einfluss auf das Fahrzeugverhalten haben kann. Dadurch vervielfacht sich die Anzahl der möglichen Zustände.

Im dritten Schritt wird die Bewertungsgröße aus einer Funktion von einer oder mehreren Messgrößen in Echtzeit berechnet. Gemäß einer bevorzugten Ausführungsvariante der Erfindung wird etwa die Schwingungsamplitude der Fahrzeuglängsbeschleunigung bei einer charakteristischen Ruckelfrequenz als eine solche Bewertungsgröße verwendet. Wie eine solche Schwingungsamplitude ableitbar ist, wird in der Folge detailliert beschrieben werden.

Zuletzt wird die berechnete Bewertungsgröße ausgegeben.

Wesentlich an der vorliegenden Erfindung ist, dass die zur Verfügung stehenden Messgrößen in Abhängigkeit von der jeweiligen Fahrsituation unterschiedlich beurteilt werden, um die Fahrbarkeit bzw. Driveability zu bestimmen. Dadurch kann eine mit der subjektiven Beurteilung durch Versuchspersonen sehr gut übereinstimmendes Bewertungsergebnis erzielt werden.

Eine besonders bevorzugte Ausführungsvariante des erfindungsgemäßen Verfahrens ist gekennzeichnet durch das Erstellen eines Simulationsmodells zur Darstellung von Abhängigkeiten zwischen den einzelnen Messgrößen und insbesonders zur Berechnung der Bewertungsgröße aus einem Satz vorbestimmter Messgrößen, die sowohl am realen Fahrzeug als auch an einem Prüfstand ermittelbar sind; sowie das Kalibrieren eines Dynamik-Prüfstandes anhand des Simulationsmodells. Als solches Simulationsmodell kann etwa ein Mehrmassen-Schwinger verwendet werden, dessen Parameter an ein bestimmtes Fahrzeug oder eine Gruppe ähnlicher Fahrzeuge angepaßt werden.

In besonders bevorzugter Weise dient das Simulationsmodell zur Darstellung von Abhängigkeiten zwischen den einzelnen Messgrößen und insbesonders zur Berechnung der Bewertungsgröße aus einem Satz vorbestimmter Messgrößen, die sowohl am realen Fahrzeug als auch an einem Prüfstand ermittelbar sind; sowie das Kalibrieren eines Dynamik-Prüfstandes anhand des Simulationsmodells.

An einem Prüfstand stehen nämlich normalerweise nicht alle Messgrößen zur Verfügung, die zur Berechnung der Bewertungsgröße erforderlich sind. Daher ist es erforderlich, aus den am Prüfstand messbaren Größen Rückschlüsse auf die nur am Fahrzeug messbaren Größen zu ziehen. Das Simulationsmodell wird dabei am realen Fahrzeug so lange verfeinert, bis die über das Simulationsmodell errechneten Werte mit den tatsächlich gemessenen Werten hinreichend gut übereinstimmen.

Im letzten Schritt wird das Simulationsmodell bei der bevorzugten Variante dazu verwendet, den Dynamik-Prüfstand zu kalibrieren.

In einer weiteren bevorzugten Ausführungsvariante der Erfindung wird als Bewertungsgröße die Schwingungsamplitude der Fahrzeuglängsbeschleunigung bei charakteristischen Ruckelfrequenzen verwendet. Ruckelfrequenzen sind dabei solche Frequenzen der Fahrzeuglängsbeschleunigung, die durch transiente Betriebszustände des Motors hervorgerufen werden.

Die Anpassung eines Dynamikprüfstandes im Sinne der Erfindung kann grundsätzlich dadurch erfolgen, dass die folgenden Schritte durchgeführt werden:

- Bestimmen von Ruckelbereichen während der Fahrt des realen Fahrzeug anhand einer charakteristischen Messgröße, wie etwa der Längsbeschleunigung,

- Erfassen des Fahrzeugbetriebszustandes während der Ruckelbereiche,

- Unterteilen der Ruckelbereiche in einen ersten Messbereich und in einen darauf folgenden zweiten Messbereich,

- Erstellen eines Frequenzspektrums der charakteristischen Messgröße,

- Bestimmen einer Frequenz innerhalb eines vorbestimmten Frequenzbereiches, bei der der größte Unterschied im Frequenzspektrum des ersten Messbereichs in Bezug auf den zweiten Messbereich vorliegt,

- Abspeichern der im vorigen Schritt gewonnenen Frequenz als charakteristische Ruckelfrequenz, zusammen mit Daten über den Fahrzeugbetriebszustand,

- Erstellen eines Simulationsmodells für das Fahrzeug, insbesondere für den Fahrzeug-Antriebsstrang,

- Durchführen von Messungen an einem Prüfstand, wobei das Simulationsmodell des vorigen Schrittes zugrundegelegt wird, wobei verschiedene Fahrzeug-Betriebszustände simuliert werden, und wobei in jedem Fahrzeugbetriebszustand für die jeweilige charakteristische Ruckelfrequenz ein geeigneter Dämpfungswert ermittelt wird, und

- Abspeichern des jeweiligen Dämpfungswertes in Abhängigkeit des Betriebszustandes.

Innerhalb des Fahrbetriebes gibt es besondere Übergangszustände, in denen ein Ruckeln zu erwarten ist. Ein solcher Übergangszustand wird beispielsweise durch das schnelle Niedertreten des Gaspedals herbeigeführt. Eine entsprechende Auswerteelektronik identifiziert solche kritischen Zustände als Ruckelbereich.

Grundsätzlich werden während der Messfahrt die relevanten Fahrzeug-Betriebszustände aufgezeichnet. Das für die Beurteilung der Fahrbarkeit relevante Signal ist die Längsbeschleunigung der Fahrzeugkarosserie. Im zweiten Schritt werden innerhalb jedes Ruckelbereiches auch weitere relevante Betriebszustände aufgezeichnet, vorzugsweise die Motordrehzahl, die Last (die Stellung der Drosselklappe) und die jeweils gewählte Gangstufe.

Wesentlich daran ist das geeignete Herausfiltern der für das Ruckeln tatsächlich relevanten Signale aus den Messdaten. Die Erfindung beruht dabei auf der Erkenntnis, dass In einem Ruckelbereich innerhalb eines ersten Zeitabschnittes im wesentlichen motorabhängige Störkomponenten vorliegen, die jedoch nach einer gewissen Zeit abgeklungen sind. Daher erfolgt in dem dritten Schritt eine Unterteilung in zwei Messbereiche, wobei in dem ersten Messbereich davon ausgegangen wird, dass das für das Ruckeln relevante Signal vorliegt, während es im zweiten Messbereich nicht vorliegt. Man kann davon ausgehen, dass das Ruckeln etwa 0,8 bis 2,5 Sekunden nach der jeweiligen Änderung abgeklungen ist. In den meisten Fällen ist die Abklingzeit 1 bis 2 Sekunden.

Im vierten Schritt wird ein Frequenzspektrum für den ersten Messbereich und ein Frequenzspektrum für den zweiten Messbereich gewonnen. Vorzugsweise erfolgt die Gewinnung dieses Frequenzspektrums über eine Fast Fourier Transformation (FFT).

Erfahrungsgemäß liegt die charakteristische Ruckelfrequenz innerhalb eines bestimmten Frequenzbereiches, etwa zwischen zwei und 7 Hz. Indem nun die Frequenzspektren der beiden Messbereiche voneinander subtrahiert werden, können die Rauschkomponenten des Signals, die durch andere Einflussfaktoren, wie Schwingungen von Reifen, Motor, Chassis, Wind, Straße, usw. verursacht werden, weitgehend ausgefiltert werden. Anhand des Maximalwertes der Amplitude kann im fünften Schritt die charakteristische Ruckelfrequenz bestimmt werden.

Die charakteristische Ruckelfrequenz hängt vom jeweiligen Betriebszustand des Fahrzeuges ab. Es wird daher im sechsten Schritt diese Frequenz als Kennfeld in Abhängigkeit von Daten über den Betriebszustand gespeichert. Wie oben bereits erwähnt, sind diese Daten typischerweise Drehzahl, Motorlast und Gangstufe. Auch die Amplitude bei der charakteristischen Ruckelfrequenz wird abgespeichert.

In an sich bekannter Weise wird für das Fahrzeug ein Simulationsmodell erstellt, um Versuche am Prüfstand durchführen zu können. Der Prüfstand simuliert dabei einen Zwei- oder Mehr-Massen-Schwinger, um die Masse des Fahrzeugs, die Steifigkeit des Antrittsstranges und das Übertragungsverhalten der Reifen wiederzugeben. Um jedoch über die Fahrbarkeit auch am Prüfstand Aussagen gewinnen zu können, muss auch die Dämpfung am Prüfstand in geeigneter Weise simuliert werden. Die Dämpfungswerte hängen wiederum vom Betriebszustand des Fahrzeugs ab und können nicht auf direkte Weise aus den Daten über das Fahrzeug ermittelt werden. Es müssen vielmehr am Prüfstand die einzelnen Fahrzeug-Betriebszustände, die zuvor als Messpunkte am realen Fahrzeug abgespeichert worden sind, nachgefahren werden, wobei am Prüfstand die jeweils bestimmte Ruckelfrequenz eingestellt wird.

Die Dämpfung kann am Prüfstand im achten Schritt dann dadurch bestimmt werden, dass der Dämpfungswert so lange verändert wird, bis die am Prüfstand gemessene Schwingungsamplitude mit der am realen Fahrzeug gemessenen Schwingungsamplitude übereinstimmt. Auf diese Weise wird der Prüfstand durch Festlegung eines Dämpfungskennfeldes geeicht, so dass es möglich ist, auch am Prüfstand einen Driveability Index zu bestimmen, der mit dem des entsprechenden Realfahrzeugs tatsächlich übereinstimmt. Nach einer solchen Eichung des Prüfstandes können nun Parameter des Motormanagements verändert werden. Da die charakteristische Ruckelfrequenz weitgehend unabhängig von der Motoreinstellung ist, bleibt sie auch nach einer solchen Veränderung am Prüfstand erhalten. Es können daher am Prüfstand in zuverlässiger Weise Aussagen über die Driveability in Abhängigkeit von verschiedenen Motoreinstellungen gewonnen werden. Da eine Simulation am Fahrzeugprüfstand automatisiert in einer wesentlichen kürzeren Zeit und mit wesentlich geringerem Aufwand möglich ist als am realen Fahrzeug, stellt die vorliegende Erfindung eine wesentliche Vereinfachung bei der Optimierung des Motormanagements dar. Damit kann bei entsprechenden Prüstandsarbeiten die Driveability als zusätzliche Zielgröße neben Verbrauch und Abgasverhalten bei der Optimierung einbezogen werden.

Für die Beurteilung der Driveability sind vorwiegend Messgrößen maßgebend, die nur im Fahrzeug und nicht am dynamischen Prüfstand zur Verfügung stehen. Ein Beispiel ist die Fahrzeuglängsbeschleunigung. In der System-Trainingsphase im Fahrzeug werden diese, am Prüfstand nicht vorhandenen Messgrößen sowohl gemessen, als auch errechnet. Über eine Differenzbildung zwischen den gemessenen und den gerechneten Größen wird ein Fehler bestimmt. In der System-Trainingsphase wird der Berechnungsmodus der Größen solange modifiziert, bis der Fehler ein Minimum wird. Das trainierte System wird dann am dynamischen Prüfstand installiert. Somit ist es auch möglich, einen speziellen Fahrzeugtyp zu simulieren. In frühen Entwicklungsphasen, wo kein Fahrzeug zur Verfügung steht, kann auf Vergleichsdaten ähnlicher Fahrzeugtypen zurückgegriffen werden.

Dadurch kann das Verfahren bereits frühzeitig bei dynamischen Prüfständen, nämlich Motor- oder Antriebsstrang-Prüfständen, eingesetzt werden.

Weiters kann vorgesehen sein, dass die Bestimmung der Bewertungsgrößen durch das Zuordnungssystem länderspezifisch durchgeführt wird. Dadurch ist es möglich, länderspezifischen Anforderungen und Ansprüchen von Lenkern Rechnung zu tragen. Beispielsweise wird in einigen Ländern eine komfortable Fahrweise und in anderen Ländern eine sportliche Fahrweise forciert und bevorzugt. Dies kann beispielsweise durch Abstimmung von Rechenparametern von iterativen Gleichungen oder durch Gewichtungsfaktoren berücksichtigt werden.

Die Ergebnisse der Berechnungen - eine große Anzahl von Einzelbeurteilungen der verschiedensten Fahrzustände - werden in Kombination mit den zugehörigen gespeicherten Triggerbedingungen - den vordefinierten Betriebszuständen des Motors und/oder des Fahrzeuges - abgelegt. Aus allen Einzelbeurteilungen wird eine relevante Bestimmungsgröße für die gesamte Fahrbarkeit errechnet.

Die erfindungsgemäße Vorrichtung zur Beurteilung der Fahrbarkeit von Fahrzeugen weist die Elemente auf, die in Patentanspruch 11 angegeben sind.

Im Datenablagesystem sind die für die Beurteilung erforderlichen Triggerbedingungen abgelegt, sowie die Ergebnisse der Berechnungen. Die erforderlichen Routinen der Auswertelogik sind bevorzugt in einem Programm abgelegt. Die gespeicherten fahrbarkeitsrelevanten Fahrzustände, abgelegt als Triggerbedingunen, und die errechneten Driveability-Ergebnisse bilden jeweils einen Datensatz.

Die obige Vorrichtung kann als Messgerät ausgebildet sein, das die Fahrbarkeit von Fahrzeugen beurteilt, in die es eingebaut ist. Durch ein solches Messgerät kann ein Fahrzeugtyp gegenüber anderen Typen in Hinblick auf die Fahrbarkeit verglichen werden. Es kann aber auch ein bestimmtes Fahrzeug zu Servicezwecken auf Alterungserscheinungen oder mögliche Defekte untersucht werden, die sich auf die Fahrbarkeit auswirken. Im Rahmen der Fahrzeugherstellung kann ein solches Gerät zur Kontrolle der produzierten Fahrzeuge eingesetzt werden.

Alternativ dazu kann eine solche Vorrichtung auch fest in Fahrzeug eingebaut sein, um dem Fahrer Rückmeldungen über den Zustand des Fahrzeug zu geben.

Zur Überwachung der Fahrbarkeitsmessung und zur Prognostizierung der noch erforderlichen Messdauer ist vorgesehen, dass die Vorrichtung einen Zähler aufweist, welcher die Anzahl der bereits erfaßten Betriebszustände aus der Gruppe der im Datenablagesystem vordefinierten Betriebszustände ermittelt.

Prinzipiell werden alle Schwingungen, die in Längsrichtung des Fahrzeuges auftreten, als mehr oder weniger störend empfunden. Eine Ausnahme ist die tatsächliche Fahrzeugbeschleunigung, deren Frequenzen meistens unter 0,5 Hz liegt. Akzeptiert werden meist auch vom Motor erzeugte Vibrationen, die nichts mit Ruckelschwingungen zu tun haben und von etwa 6 Hz aufwärts reichen. Vorzugsweise ist deshalb vorgesehen, dass Frequenzen unter 0,5 Hz und ab etwa 8 Hz, vorzugsweise ab 6 Hz, von der Messdatenerfassung bzw. Messdatenauswertung ausgenommen werden. Dies kann beispielsweise durch Bandsperren oder einem Bandpassfilter erfolgen.

Informationen über die spätere Fahrzeug-Fahrbarkeit können durch die Erfindung schon in einem sehr frühen Entwicklungsstadium von Kraftfahrzeugen gewonnen werden, die Abstimmung von Motormanagement-Parametern erfolgt nach Kriterien für Kraftstoffverbrauch, Schadstoffemissionen und Fahrbarkeit. Die Entwicklungszeit wird dadurch verkürzt, die Abstimmungsqualität verbessert. Weiters verbessert sich das Emissionsverhalten der Abstimmung.

Das System kann sowohl im On-line-Betrieb als auch im Off-line-Betrieb eingesetzt werden.

In der Folge wird die Erfindung anhand der in den Figuren dargestellten Ausführungsbeispiele näher erläutert. Es zeigen:

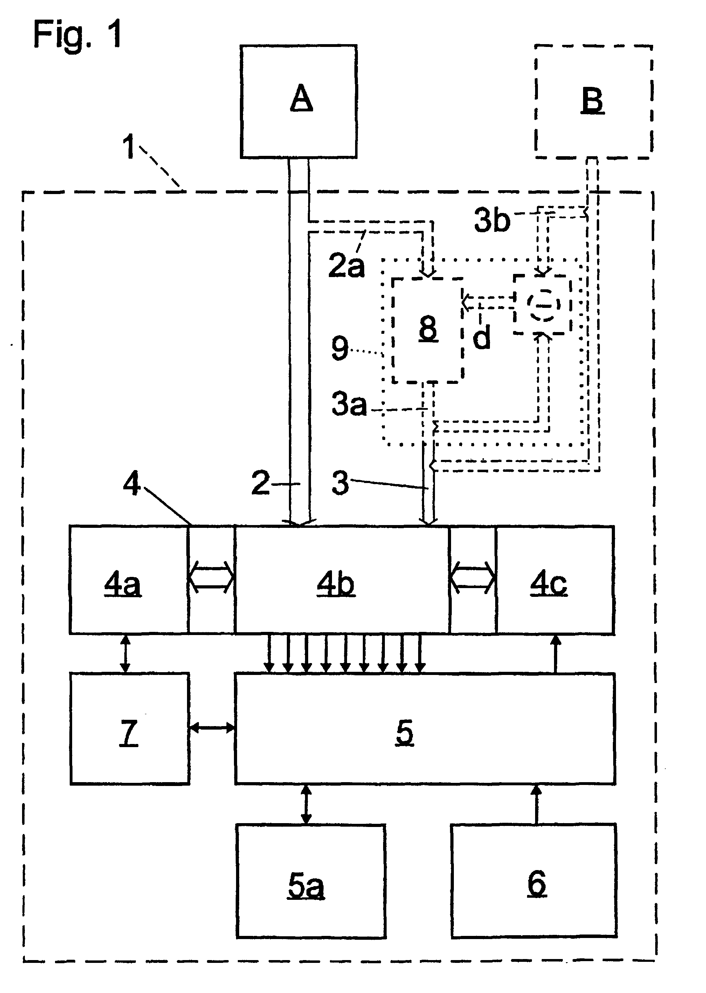

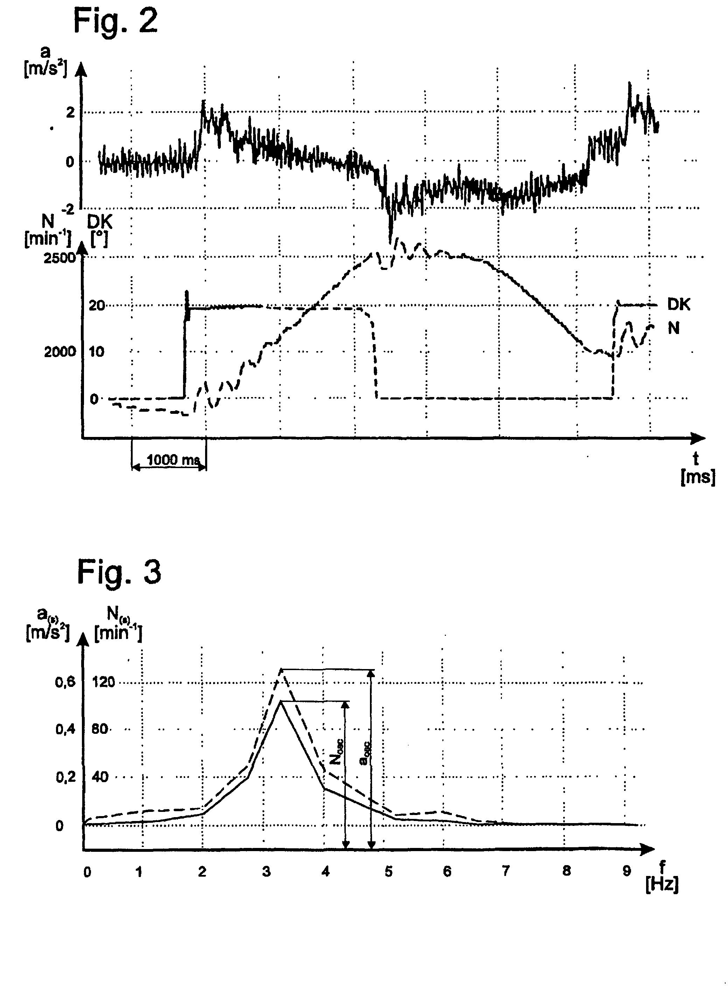

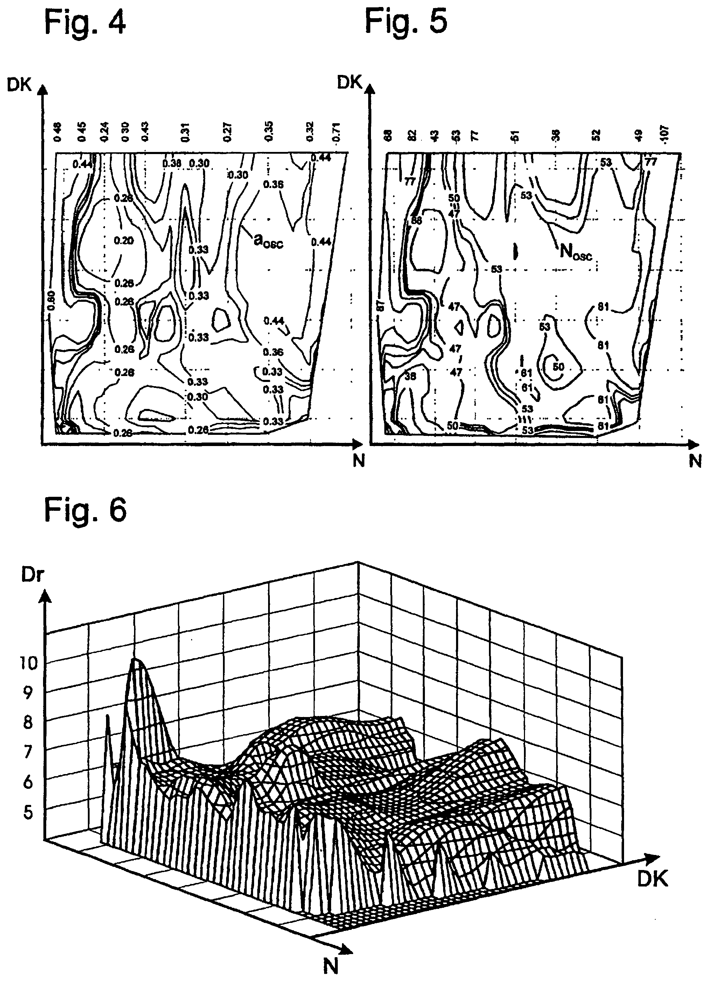

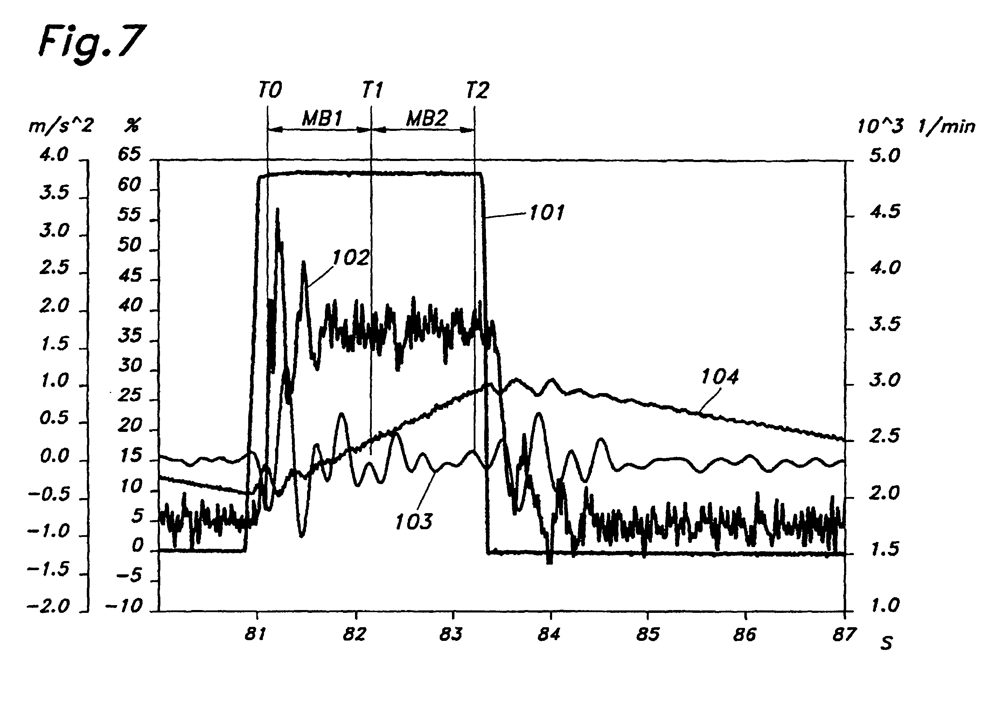

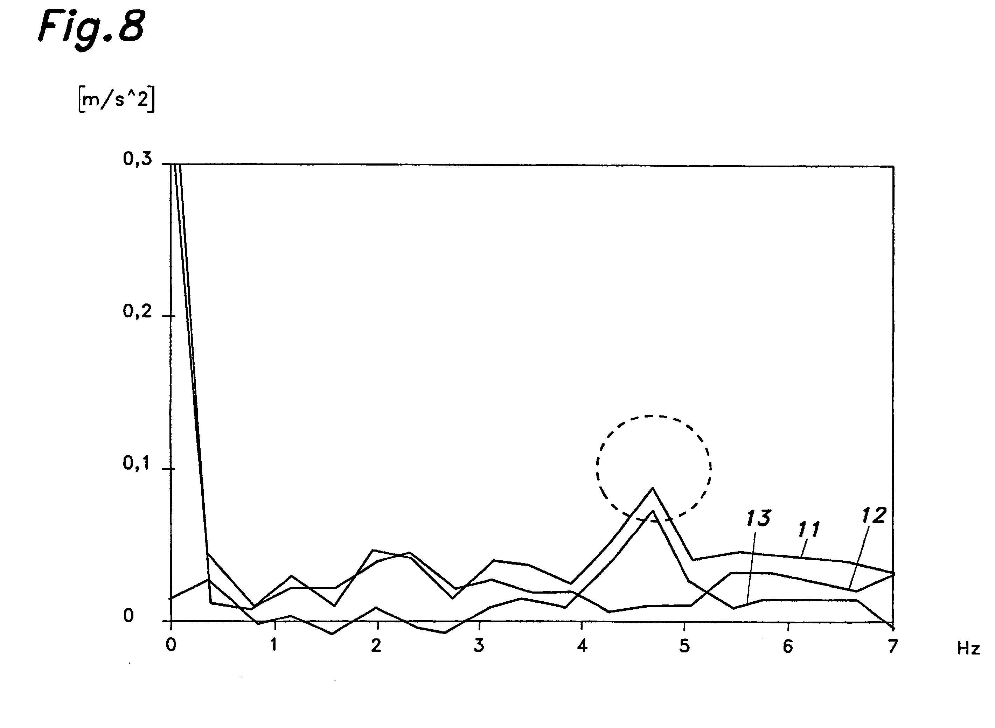

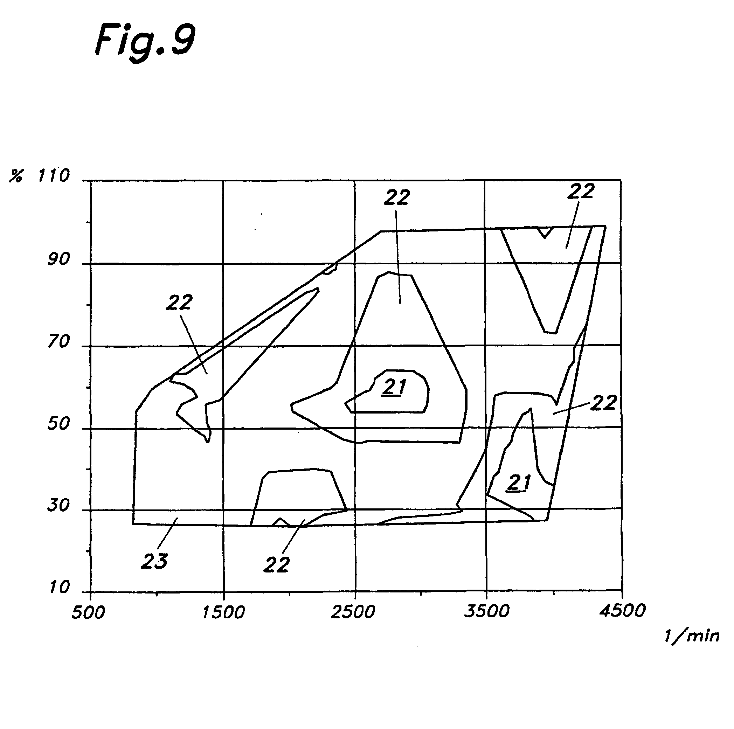

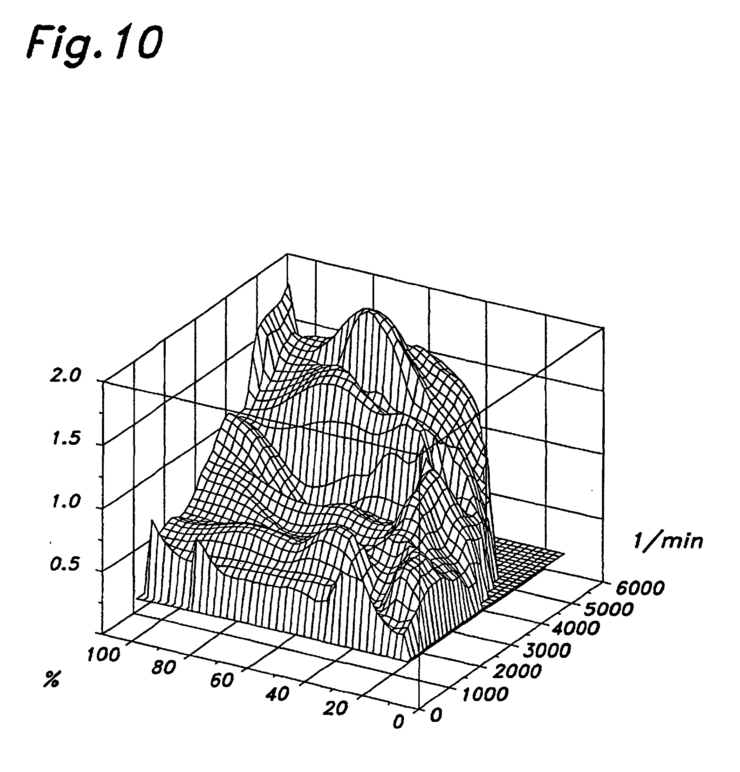

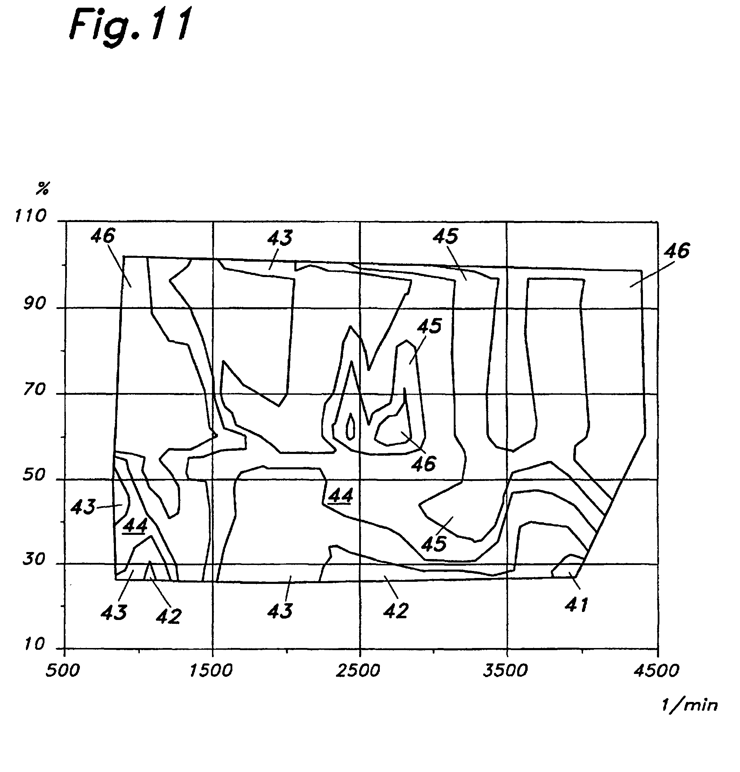

Fig. 1 die erfindungsgemäße Vorrichtung in einem schematischen Blockschaltbild; Fig. 2 ein Messdiagramm für die Messgrößen Drosselklappenstellung, Beschleunigung und Drehzahl; Fig. 3 die Messgrößen Beschleunigung und Drehzahl nach einer FFT; Fig. 4 und 5 Drosselklappenstellung-Drehzahl-Diagramme mit eingetragenen Ruckelerscheinungen; Fig. 6 ein 3-D-Diagramm mit der berechneten Fahrbarkeits-Bewertung; Fig. 7 ein Diagramm verschiedener Messgrößen im Zeitbereich, Fig. 8 ein Diagramm, das die Schwankungen der Längsbeschleunigung des Fahrzeugs im Bildbereich zeigt, Fig. 9 ein Kennfeld, das die charakteristische Ruckelfrequenz in Abhängigkeit von Motordrehzahl und Last zeigt, Fig. 10 ein Kennfeld, das die Ruckelintensität in Abhängigkeit von Motordrehzahl und Last zeigt und Fig. 11 ein Diagramm, das die Dämpfungswerte in einem Kennfeld in Abhängigkeit von Motordrehzahl und Last zeigt.

Das System 1 wird im zu testenden Fahrzeug installiert und mißt selbständig, ohne jeglichen Bedienungsaufwand, die fahrbarkeitsrelevanten Messgrößen 2, 3 der Betriebszustände des Motors A und/oder des Fahrzeuges B, beispielsweise Motordrehzahl, Drosselklappenstellung oder Gaspedalstellung, Fahrzeuggeschwindigkeit, Fahrzeuglängsbeschleunigung, Saugrohrunterdruck, Kühlmitteltemperatur, Zündzeitpunkt, Einspritzmenge, Lambda-Wert, Abgasrückführrate und Abgastemperatur. Die Messdaten 2, 3 werden von Speicherzellen 4b der Datenablageeinheit 4 permanent aufgezeichnet. Fahrbarkeitsrelevante, stationäre und dynamische Zustände dieser Messdaten, sogenannte Triggerbedingungen 4a, sind ebenfalls in der Datenablageeinheit 4 abgelegt. Bei Übereinstimmung der Messdaten 2, 3 mit den gespeicherten Triggerbedingungen 4a wird durch die Auswerteeinheit 5 eine vordefinierte mathematische und statistische Auswertung in einer Auswertungseinheit 5a gestartet. Diese Auswertung beinhaltet eine vollständige, objektive und reproduzierbare Nachbildung des Fahrergefühls des momentanen Fahrzustandes. Der Berechnungsablauf und der Zusammenhang zwischen den momentanen Messdaten und dem subjektiven Fahrbarkeitsgefühl ist als Resultat einer Vielzahl von Messungen und Korrelationen zwischen subjektiver Beurteilung und objektiven Messgrößen in einem Zuordnungssystem 6 abgelegt. Die Ergebnisse der Berechnungen werden vollautomatisch in vordefinierten Speicherzellen 4c der Datenablageeinheit 4 abgelegt.

Das System 1 kann im Permanentbetrieb im realen Fahrbetrieb eingesetzt werden. Der Fahrer braucht dabei keinerlei Aufmerksamkeit für das System 1 aufzubringen, die Fahrt kann dadurch auch anderen Zwecken dienen. Zur Erfassung eines fahrer-, fahrzeug- und streckenrelevanten Fahrprofilverlaufes wird die Anzahl gefahrener Triggerbedingungen 4a analysiert und gespeichert. Unter anderem kann dieses Ergebnis dazu dienen, Fahrzustände, die in der Praxis oft gefahren werden, in der Entwicklungs- und Kalibrierphase genauer abzustimmen.

Ein Zähler 7 zählt wie viele der vordefinierten Triggerbedingungen bereits erfaßt wurden und liefert Informationen über die erforderliche Messdauer in Abhängigkeit von der geforderten Analysengenauigkeit.

Mehrfach detektierte Triggerbedingungen 4a werden dabei mit statistischen Mitteln ausgewertet, etwa durch Mittelwertbildung der Berechnungsresultate oder durch Herausfiltern von abweichenden Ergebnissen.

Die erforderliche Messdauer für eine gesamte Fahrzeuganalyse beträgt einige Stunden. Danach steht ein vollständiger Datensatz für die Fahrbarkeitsbeurteilung zur Verfügung. Auf dem Wege einer statistischen Bewertung kann aus dem Gesamtdatensatz eine Ersatzzahl zur Fahrbarkeitsbewertung gebildet werden.

Gegebenenfalls kann - etwa zur Kalibrierung - eine Messung und Analyse selektiver Fahrbarkeitszustände, etwa Leerlauf, Vollast, od. ähnliches, durchgeführt werden. In diesem Falle stehen nur die Einzelergebnisse zur Verfügung.

Im On-line-Betrieb kann das System 1 auch als selbstlernendes System ausgelegt sein. Sollten Fahrzustände auftreten, die nicht über die Triggerbedingungen 4a in der Recheneinheit vordefiniert sind, deren Auswertung jedoch eine sehr schlechte oder auch sehr gute Fahrbarkeitsbeurteilung ergeben, werden diese in Kombination mit dem Ergebnis erfaßt und für die Auswertung gekennzeichnet. Bei der nächsten Messung sind die somit gelernten Triggerbedingungen 4a bereits vordefiniert.

Im Off-line-Betrieb können die Auswerteergebnisse tabellarisch und graphisch dargestellt werden. Durch Vorgabe von Schwellergebnissen können auch Auswerteergebnisse, die beispielsweise schlechter als die Schwellwerte sind, hervorgehoben werden. Gelernte Triggerbedingungen 4a können ggf. separat dargestellt werden. Im Off-line-Betrieb ist auch ein einfacher Vergleich zwischen den aktuellen Messungen und vorangegangenen Messungen möglich, wobei Auswirkungen von Änderungen sofort überprüft werden können. Darüber hinaus können die Ergebnisse auch mit Messresultaten von anderen Fahrzeugen ähnlicher Bauart verglichen werden.

Ein besonderer Vorteil der vorliegenden Erfindung ist, dass bereits am dynamischen Motorprüfstand eine Fahrbarkeitsbeurteilung möglich ist. Dazu wird gemäß einer Ausbildung der Erfindung eine in der Fig.1 strichliert angedeutete Einrichtung 8 eingesetzt, welche fahrbarkeitsrelevante Fahrzeugmessdaten 3, die am dynamischen Motorprüfstand nicht zur Verfügung stehen, etwa die Längsbeschleunigung des Fahrzeuges, aus motorbezogenen Ersatzmessdaten 2a, etwa aus Motorvibration, Lagerauflagekraft, etc. nachbildet.

Eine besonders bevorzugte Ausführung der Erfindung sieht vor, dass das System 1 in Verbindung mit einer selbstlernenden Fahrzeug-Simulationseinrichtung 9 eingesetzt wird, wie in der Fig. 1 punktiert eingezeichnet ist. Eine selbstlernende Fahrzeug-Simulationseinrichtung 9, aufgebaut etwa aus neuronalen Netzen, simuliert vollständig die Fahrzeugeigenschaften. Die Fahrzeug-Simulationseinrichtung 9 kann im realen Fahrzeugeinsatz trainiert bzw. kalibriert werden. Dabei werden die durch die motorbezogenen Ersatzmessdaten 2a simulierten Fahrzeugdaten 3a für verschiedene Betriebspunkte mit realen Fahrzeugmessdaten 3b, beispielsweise in einem iterativen Verfahren, verglichen und die Differenz d der Einrichtung 8 zur Nachbildung der Fahrzeugmessdaten zugeführt. Aufgrund der Differenz d werden die Parameter des verwendeten Simulationsalgorithmus korrigiert und aktualisiert. Nach genügend genauer Simulation der Fahrzeugmessdaten kann die trainierte Fahrzeug-Simulationseinrichtung 9 am dynamischen Motorenprüfstand für das Fahrbarkeits-Beurteilungs-Verfahren eingesetzt werden. Somit ist am Dynamikprüfstand eine exakte Fahrzeugnachbildung verfügbar. Die Fahrzeug-Simulationseinrichtung 9 ist vorteilhafterweise als ein an das System 1 andockbares Modul ausgebildet. Dies ermöglicht einen raschen Wechsel bzw. Umbau zwischen Trainings- und Prüfstandseinsatz.

Das System 1 kann weiter an automatischen Kalibrierprogrammen zur Parameterbestimmung von Motormanagementsystemen angekoppelt werden. Die Koppelung ermöglicht dabei die Einbeziehung der Fahrbarkeitsinformation zur raschen stationären und dynamischen Kalibrierung.

Das Bewertungsverfahren wird im folgenden anhand eines konkreten Beispieles, nämlich anhand eines sogenannten "Tip In" Vorganges im zweiten Gang, also einem Beschleunigungsvorgang mit zunehmender Drosselklappenöffnung, erläutert.

Im realen Fahrbetrieb wird zunächst für den "Tip In" Fall die Drosselklappenstellung DK, die Motordrehzahl N und die Längsbeschleunigung a über der Zeit gemessen (siehe Fig. 2). Parallel dazu werden die subjektiven Empfindungen von Testpersonen erfaßt. Als Bewertungskriterium dient dabei eine zehnteilige Skala von ausgezeichnet = 10 bis äußerst schlecht = 1.

Danach wird eine Auswertung von Drehzahl N und Längsbeschleunigung a durchgeführt. Berechnet wird dabei die FFT (Fast Fourier Transformation) der Drehzahl N und der Längsbeschleunigung a, wie in Fig. 3 dargestellt ist. Deutlich ist zu erkennen, dass Amplitudenmaxima im Bereich zwischen 3 und 4 Hz für den konkreten Fall auftreten.

Der Maximalwert der Ruckelschwingungen im Frequenzbereich zwischen 2 und 8 Hz, sowie die Frequenz, bei der der Maximalwert auftritt, wird dabei nach folgender Gleichung berechnet:

$$a(s) = \int_{-\infty}^{\infty} e^{-ist} a(t)\ dt \qquad\qquad (1)$$

wobei st den imaginären Anteil und a(t) den zeitlichen Verlauf der Beschleunigung a darstellt.

In einem zweiten Schritt wird eine Korrelation von subjektivem Empfinden und den FFT-Amplituden der Längsbeschleunigung nach folgender Gleichung durchgeführt:

$$Dr = \frac{c1}{\sqrt{c2 \cdot a_{osc}^{c3}}} \qquad\qquad (2)$$

wobei c1, c2 und c3 Einstellparameter sind, $a_{osc}$ das Amplitudenmaximum der Ruckelschwingung im Bereich von 2 bis 8 Hz darstellt und Dr der berechnete Driveability-Index als Bewertungsgröße ist. Die Koeffizienten c1, c2 und c3 können in einem selbstlernenden System automatisch gefunden werden. Beispielsweise können dafür Iterationsschleifen verwendet werden, in denen die Koeffizienten so lange geändert werden, bis die Abweichung zwischen dem berechneten Wert Dr und der subjektiven Beurteilung $Dr_{subj}$ ein Minimum wird. Dies geschieht nach den folgenden Glei-chungen:

$$c1_{i+1} = c1_i + p_i, \qquad\qquad (3)$$

$$c2_{i+1} = c2_i + q_i \qquad\qquad (4)$$

$$c3_{i+1} = c3_i + r_i \qquad\qquad (5)$$

dabei stellen die Ausdrücke $p_i$, $q_i$ und $r_i$ Variationsschrittweiten dar. Die Variation von c1, c2 und c3 wird solange durchgeführt, bis die Differenz zwischen dem berechneten Driveability-Index Dr und dem subjektiven Driveability-Index $Dr_{subj}$ kleiner ist als ein vordefinierter Grenzwert.

Nach vollständigem Systemtraining kann die subjektive Beurteilung im Fahrzeug vollständig aus den Amplituden $a_{osc}$ der Ruckelschwingungen nachgebildet werden. Die gefundenen Koeffizienten c1, c2, c3 bilden die subjektive Beurteilung nach. Somit ist es auch möglich, nationale länderspezifische Eigenheiten genau zu erfassen. In Ländern, wo komfortables Fahrverhalten mit tendenziell größeren Ansprechzeiten bevorzugt werden, erfolgt die Bewertung anders als in Ländern mit eher sportlich orientierten Fahrweisen. Selbstverständlich kann das System auch zur Beurteilung der Fahrweise des Fahrers dienen.

Der gezeigte Berechnungsweg ist nur eine von zahlreichen Möglichkeiten, die Bewertung durchzuführen. Die Iteration kann beispielsweise auch mit anderen aus der Mathematik und Statistik bekannten Verfahren durchgeführt werden.

Am dynamischen Prüfstand steht keine Längsbeschleunigung als Messgröße zur Verfügung. In diesem Fall wird das Beschleunigungssignal a aus den vorhandenen Signalen der Drehzahl N und des Motordrehmomentes nachgebildet. Die Drehzahl N ist dabei das einzige Signal, das sowohl am dynamischen Prüfstand, als auch im Fahrzeug ohne weiteres zur Verfügung steht, da die Messung des Drehmomentes mit vergleichsweise großem Aufwand verbunden ist.

Zur Nachbildung der Längsbeschleunigung a aus der Drehzahl N wird wiederum ein selbstlernendes System verwendet. Im ersten Schritt wird eine Korrelation zwischen dem Drehzahlsignal N und der Längsbeschleunigung a, beispielsweise auf iterativem Wege gebildet. Im zweiten Schritt wird das Längsbeschleunigungssignal a aus der Drehzahl N am dynamischen Prüfstand generiert.

In gleicher Weise wie die im Beispiel demonstrierte "Tip In"-Bewertung erfolgt die Auswertung von anderen relevanten Größen, wie etwa Leerlaufqualität, Konstantfahrt, Vollastbeschleuniung, Gangwechsel, Warmlaufverhalten, Startvorgang, etc. Zusätzlich können noch für die Bewertung wichtige zeitliche Größen, wie etwa Verzugszeiten berücksichtigt werden. Solche Verzugszeiten sind beispielsweise Verzögerungen in der Gasannahme oder Verzögerungen der Motorbremswirkung nach dem Schließen der Drosselklappe. Ein weiteres Beispiel hierfür sind Drehzahlüberschwingungen beim Schalten, wobei die Drehzahl nach dem Auskuppeln trotz gleichzeitigem Schließen der Drosselklappe ansteigt statt abzufallen.

Die Fig. 4 und 5 zeigen Kennfelder der im Tip In Fall auftretenden Amplitudenmaxima $N_{osc}$ und $a_{osc}$ der Ruckelschwingungen der Drehzahl N und der Längsbeschleunigung a, dargestellt über der Drehzahl N und über der maximalen Drosselklappenstellung DK während des Tip In Vorganges.

Das Ergebnis der Beurteilung für den Fall "Tip In" ist das in Fig. 6 gezeigte Kennfeld, in welchem die Fahrbarkeitsbewertung Dr über der Drehzahl N und der Drosselklappenstellung DK aufgetragen ist. Die Fahrbarkeitsbewertung Dr im Kennfeld ist dabei folgendermaen skaliert:

10      nicht störend für besonders erfahrene Testfahrer
9       störend für besonders erfahrene Testfahrer
8       störend für kritische Fahrer
7       störend für einige Fahrer
6       störend für alle Fahrer
5       sehr störend für alle Fahrer.

In der Fig. 7 sind über der Zeit verschiedene Messgrößen aufgetragen. Mit 101 ist die Stellung der Drosselklappe bezeichnet. Die daraus resultierende Beschleunigung in m/s$^2$ ist mit 102 bezeichnet. Weiter sind die gefilterte Beschleunigung 103 und die Motordrehzahl 104 eingetragen. Ein typischer Ruckelbereich ist in diesem Diagramm dadurch gegeben, dass kurz nach der Sekunde 81 die Position der Drosselklappe von Null auf über 60% gesteigert wird. Etwa bei Sekunde 83,5 wird die Drosselklappe wieder vollständig geschlossen. Durch eine entsprechende Auswerteelektronik wird der Ruckelbereich als Zeitabschnitt zwischen den Zeitpunkten T0 und T2 festgelegt. Dieser Rukkelbereich von T0 bis T2 wird weiter in einem ersten Messbereich MB1 und in einem zweiten Messbereich MB2 unterteilt.

Der erste Messbereich MB1 erstreckt sich zwischen dem Zeitpunkt T0 und einem Zeitpunkt T1, während der zweite Messbereich MB2 zwischen dem Zeitpunkt T1 und dem Zeitpunkt T2 gewählt ist. Im vorliegenden Fall wird die Dauer des ersten Messbereichs MB1 mit einer Sekunde festgelegt.

In dem Diagramm der Fig. 8 ist auf der waagrechten Achse die Frequenz in Hz aufgetragen. Auf der senkrechten Achse ist die Amplitude der Beschleunigungsschwankungen bei der jeweiligen Frequenz aufgetragen, die Fig. 8 zeigt somit Frequenzspektren der Beschleunigung. Mit 11 ist dabei das aus dem ersten Messbereich gewonnene Spektrum bezeichnet, während mit 12 das Spektrum aus dem zweiten Messbereich bezeichnet Ist. Die Differenz der beiden Spektren ist mit 13 bezeichnet. Es ist ersichtlich, dass die Differenz der Spektren innerhalb eines Erwartungsbereichs, der zwischen 2 und 7 Hz liegt, ein deutlich ausgeprägtes Maxium aufweist. In Fig. 8 liegt dieses Maximum bei einer Frequenz von 4,7 Hz.

Im Zuge der Aufzeichnung von Messwerten während des Fahrbetriebs eines realen Fahrzeuges wird eine Vielzahl von Messpunkten bei verschiedenen Werten der Motordrehzahl, der Drosselklappenstellung und des jeweils eingelegten Ganges gewonnen.

In der Fig. 9 ist für eine bestimmte Gangstufe ein Kennfeld dargestellt, das aus diesen Versuchen gewonnen worden ist. Auf der waagrechten Achse ist die Motordrehzahl in 1/min aufgetragen, während auf der senkrechten Achse die Stellung der Drosselklappe in Prozent wiedergegeben ist. Die Bereiche 21 stellen diejenigen Bereiche dar, in denen die charakteristische Ruckelfrequenz zwischen 3,5 und 4 Hz liegt. Die Bereiche 22 weisen eine charakteristische Ruckelfrequenz zwischen 4 und 4,5 Hz auf, während die Bereiche 23 eine charakteristische Ruckelfrequenz von mehr als 4,5 Hz haben.

In der Fig. 10 ist in einer dreidimensionalen Darstellung die Amplitude bei der charakteristischen Ruckelfrequenz in Abhängigkeit von Motordrehzahl und Stellung der Drosselklappe aufgetragen. Die Motordrehzahl ist dabei in 1/min zwischen 0 und 6000 dargestellt, während die Stellung der Drosselklappe in Prozent zwischen 0 und 100 aufgetragen ist. Auf der senkrechten Achse ist die Ruckelamplitude in m/s$^2$ dargestellt.

In der Fig. 11 ist ein Kennfeld dargestellt, in dem die Dämpfungswerte, die am Dynamikprüfstand einzustellen sind, wiedergegeben werden. Wieder ist auf der waagrechten Achse die Motordrehzahl in 1/min und auf der senkrechten Achse die Stellung der Drosselklappe in Prozent aufgetragen. In der folgenden Tabelle ist der ermittelte Dämpfungswert neben der Bezeichnung der Bereiche in der Fig. 5 aufgetragen.

| Bezugszeichen | Dämpfungswert |
| --- | --- |
| 41 | <0,4 |
| 42 | 0,4- 0,45 |
| 43 | 0,45-0,5 |
| 44 | 0,5 -0,55 |
| 45 | 0,55-0,6 |
| 46 | >0,6 |

Durch die vorliegende Erfindung ist es möglich, einen Dynamikprüfstand für Fahrzeugmotoren so einzustellen und zu kalibrieen, dass das Fahrzeugverhalten in Bezug auf die Fahrbarkeit vollständig nachgebildet werden kann. Auf diese Weise kann das Fahrverhalten in sehr genauer Weise am Prüfstand dargestellt werden. Es können die einzelnen Betriebsarbeiten, wie Leerlauf, Tip in (plötzliches Gasgeben) Let off (plötzliches Gaswegnehmen) Konstantfahrt, Beschleunigung, Schalten oder Schub getrennt voneinander untersucht werden.

## Patentansprüche

1. Verfahren zur Analyse des Fahrverhaltens von Kraftfahrzeugen, mit folgenden Schritten:

   - Durchführen von Messungen an einem realen Fahrzeug zur Gewinnung von Messgrößen über das Fahrverhalten;

   - laufende Überprüfung, ob vorbestimmte Triggerbedingungen (4a), d.h. Konstellationen von Messgrößen (2, 3), erfüllt sind, die vorbestimmten Fahrzuständen des Kraftfahrzeuges entsprechen;

   - nur dann, wenn eine der Triggerbedingungen (4a) erfüllt ist, Berechnen mindestens einer Bewertungsgröße (Dr), die die Fahrbarkeit des Fahrzeugs ausdrückt, aus einer oder mehreren Messgrößen (2, 3) aufgrund einer vorbestimmten, von der Triggerbedingung abhängigen Funktion;

   - Ausgeben der Bewertungsgröße (Dr).

2. Verfahren nach Anspruch 1, wobei die Ableitung der Funktion zur Berechnung der Bewertungsgröße (Dr) dadurch erfolgt, dass Aussagen von Versuchspersonen über die Fahrbarkeit bzw. das Fahrverhalten des Fahrzeugs mit statistischen Mitteln ausgewertet werden.

3. Verfahren nach einem der Ansprüche 1 bis 2, wobei als Messgrößen (2, 3) eine Auswahl aus der folgenden Gruppe verwendet wird: Motordrehzahl (N), Drosselklappen- bzw. Gaspedalstellung (DK), Fahrzeuggeschwindigkeit, Fahrzeuglängsbeschleunigung (a), Saugrohrunterdruck, Kühlmitteltemperatur, Zündzeitpunkt, Einspritzmenge, Lambda-Wert, Abgasrückführrate und Abgastemperatur.

4. Verfahren zur Analyse des Fahrverhaltens von Kraftfahrzeugen, mit folgenden Schritten:

- Erstellen eines Simulationsmodells für ein Fahrzeug zur Abbildung dieses Fahrzeugs auf einem dynamischen Prüfstand;

- Durchführen von Messungen am Prüfstand zur Gewinnung von Messgrößen (2, 3) über das Fahrverhalten des simulierten Fahrzeugs;

- laufende Überprüfung, ob vorbestimmte Triggerbedingungen (4a), d.h. Konstellationen von Messgrößen (2, 3), erfüllt sind, die vorbestimmten Fahrzuständen des Kraftfahrzeuges entsprechen;

- nur dann, wenn eine der Triggerbedingungen (4a) erfüllt ist, Berechnen mindestens einer Bewertungsgröße (Dr), die die Fahrbarkeit des simulierten Fahrzeugs ausdrückt, aus einer oder mehreren Messgrößen (2, 3) aufgrund einer vorbestimmten, von der Triggerbedingung abhängigen Funktion;

- Ausgeben der Bewertungsgröße (Dr).

5. Verfahren nach Anspruch 4, wobei ein Simulationsmodell zur Darstellung von Abhängigkeiten zwischen den einzelnen Messgrößen (2, 3) und insbesondere zur Berechnung der Bewertungsgröße (Dr) aus einem Satz vorbestimmter Messgrößen (2, 3), die sowohl am realen Fahrzeug als auch an einem Prüfstand ermittelbar sind, erstellt wird; sowie das Kalibrieren eines Dynamik-Prüfstandes anhand des Simulationsmodells.

6. Verfahren nach einem der Ansprüche 4 bis 5, wobei das Simulationsmodell unter Zugrundelegung von Daten über das Fahrzeug rechnerische Werte für fahrzeugbezogene Messgrößen aus motorbezogenen Messgrößen ableitet.

7. Verfahren nach einem der Ansprüche 1 bis 6, wobei als Bewertungsgröße (Dr) die Schwingungsamplitude der Fahrzeuglängsbeschleunigung (a) bei charakteristischen Ruckelfrequenzen verwendet wird.

8. Verfahren nach einem der Ansprüche 1 bis 7, wobei das Kalibrieren des Dynamik-Prüfstandes die Bestimmung eines Dämpfungswertes umfaßt, der eine optimale Anpassung des Prüfstandes ermöglicht.

9. Verfahren nach einem der Ansprüche 1 bis 8, wobei die Zuordnung der Bewertungsgröße (Dr) aufgrund von mathematischen und statistischen Routinen, Vergleichsrechnungen, Fuzzy Logik Verfahren oder mittels neuronaler Netze erfolgt.

10. Verfahren nach einem der Ansprüche 1 bis 9, wobei aus der Gesamtdatenmenge an Bewertungsgrößen (Dr) über die Fahrbarkeit in allen erfaßten Betriebszuständen ein Gesamtindex zur Fahrbarkeitsbewertung mit statistischen Mitteln berechnet wird, wobei die Gewichtung des Einflusses der einzelnen Betriebszustände auf den Gesamtindex vom Typ des Fahrers abhängig ist.

11. Vorrichtung zur Beurteilung der Fahrbarkeit von Kraftfahrzeugen, welches folgende Elemente aufweist:

- ein Messsystem mit Messwertaufnehmern zur Erfassung zumindest einer für die Fahrbarkeit relevanten Messgrößen (2, 3) aus der Gruppe Motordrehzahl (N), Drosselklappenstellung (DK), Gaspedalstellung, Fahrzeuggeschwindigkeit, Fahrzeuglängsbeschleunigung (a), Saugrohrunterdruck, Kühlmitteltemperatur, Zündzeitpunkt, Einspritzmenge, Lambda-Wert, Abgasrückführrate und Abgastemperatur samt Aufnahmeelektronik;

- ein Datenablagesystem (4) mit Triggerbedingungen (4a), das sind Konstellationen mehrerer Messgrößen (2, 3) sowie über mit Daten korrelierende Bewertungsgrößen (Dr) über die Fahrbarkeit;

- ein Zuordnungssystem (6) zum Zuordnen von Bewertungsgrößen (Dr) über die Fahrbarkeit des Fahrzeuges (B) zu den Daten (2, 3) über den Betriebszustand des Motors (A) und/oder des Fahrzeuges (B);

- eine Auswerteeinheit (5) zum Vergleichen der gemessenen mit den abgelegten Daten sowie zur Bestimmung von Bewertungsgrößen (Dr) über die Fahrbarkeit unter Verwendung des Zuordnungssystems (6), unter der Voraussetzung, dass eine der Triggerbedingungen (4a) vorliegt, in Abhängigkeit von der Triggerbedingung.

12. Vorrichtung nach Anspruch 11, wobei ein Bandpassfilter oder eine Bandsperre vorgesehen ist, um Frequenzen der Fahrzeuglängsbeschleunigung unterhalb von etwa 0,5 Hz und oberhalb von etwa 8 Hz, vorzugsweise ab 6 Hz, von der Messdatenerfassung bzw. Messdatenauswertung auszunehmen.

**13.** Vorrichtung nach einem der Ansprüche 11 oder 12, wobei eine Einrichtung (8) zur Nachbildung von für die Fahrbarkeit relevanten Fahrzeugmessdaten (3) aus motorbezogenen Messdaten (2a) vorgesehen ist.

**Claims**

**1.** Method for analyzing the driving behaviour of motor vehicles, comprising the following steps:

- Conducting tests with a real vehicle to obtain measurement variables on its driving performance.

- Continuous monitoring to check whether predefined trigger conditions (4a) are fulfilled, i.e., whether a certain set of variables (2, 3) corresponding to predefined driving states of the vehicle take on certain values.

- Only if one of the trigger conditions (4a) is fulfilled, at least one rating (Dr) describing vehicle driveability is computed from one or more measured values (2, 3), using a predefined functional relationship depending on said trigger condition.

- Output of the rating (Dr).

**2.** Method according to claim 1, wherein the function for computing the driveability rating (Dr) is derived by statistically evaluating statements of test drivers concerning the vehicle's driveability or driving performance.

**3.** Method according to any of claims 1 to 2, wherein the measurement variables (2, 3) employed are selected from the group of engine speed (N), position of throttle or accelerator pedal (DK), vehicle speed, longitudinal vehicle acceleration (a), intake manifold vacuum, coolant temperature, ignition point, injection volume, lambda value, exhaust gas recirculation rate, and exhaust gas temperature.

**4.** Method for analyzing the driving behaviour of motor vehicles, comprising the following steps:

- Preparation of a simulation model for a vehicle in order to simulate this vehicle on a dynamic test stand.

- Conducting tests on the test stand to obtain measured variables (2, 3) on the driving performance of the simulated vehicle.

- Continuous monitoring to check whether predefined trigger conditions (4a) are fulfilled, i.e., whether a certain set of variables (2, 3) corresponding to predefined driving states of the vehicle take on certain values.

- Only if one of the trigger conditions (4a) is fulfilled, at least one rating (Dr) describing driveability of the simulated vehicle is computed from one or more measured values (2, 3), using a predefined functional relationship depending on said trigger condition.

- Output of the rating (Dr).

**5.** Method according to claim 4, wherein a simulation model is prepared to exhibit the dependencies between individual measurement variables (2, 3) and, in particular, to compute the driveability rating (Dr) from a set of predefined measured variables (2, 3), which can be obtained both with the actual vehicle and on a test stand, and wherein a dynamic test stand is calibrated with the use of the simulation model.

**6.** Method according to any of claims 4 to 5, wherein computed values for vehicle-related measurement variables are derived from engine-related measurement variables with the use of the simulation model based on vehicle data.

**7.** Method according to any of claims 1 to 6, wherein the oscillation amplitude of longitudinal vehicle acceleration (a) at characteristic surge frequencies is used as driveability rating (Dr).

**8.** Method according to any of claims 1 to 7, wherein calibration of the dynamic test stand comprises determination of a damping value permitting optimum adjustment of the test stand.

**9.** Method according to any of claims 1 to 8, wherein the driveability rating (Dr) is assigned with the use of mathematical and statistical routines, reference computations, fuzzy logic procedures, or neural nets.

10. Method according to any of claims 1 to 9, wherein from the complete set of data for driveability ratings (Dr) in all operational states processed an overall driveability index is computed statistically, the weighting of the influence of individual operational states on the overall index being dependent on the type of driver.

11. Device of the invention for rating the driveability of motor vehicles, comprising the following elements:

   - A measuring system with transducers to determine at least one driveability-related measurement variable (2, 3) from the group of engine speed (N), throttle position (DK), accelerator pedal position, vehicle speed, longitudinal vehicle acceleration (a), intake manifold vacuum, coolant temperature, ignition point, injection volume, lambda value, exhaust gas recirculation rate, exhaust gas temperature, including recording electronic.

   - A data storage system (4) with trigger conditions (4a), i.e., a set of measurement variables (2, 3), and of correlated driveability ratings (Dr).

   - An assigning system (6) for assigning ratings (Dr) on the driveability of a vehicle (B) to the data (2, 3) describing the operational state of engine (A) and/or vehicle (B).

   - An evaluation unit (5) for comparing measured and stored data, and for determining driveability ratings (Dr) with the use of the assigning system (6) under the provision that one of the trigger conditions (4a) is fulfilled, in dependence of said trigger condition.

12. A device according to claim 11, wherein a filter for passing or blocking frequency bands is provided, in order to omit frequencies of longitudinal vehicle acceleration of less than 0.5 Hz and more than approximately 8 Hz, or 6 Hz preferably, from data recording and evaluation.

13. A device according to any of claims 11 or 12, wherein a unit (8) is provided for simulating driveability-relevant vehicle test data (3) with the use of engine-related test data (2a).

**Revendications**

1. Procédé d'analyse du comportement de roulement de véhicules, comprenant les étapes suivantes

   - on effectue des mesures sur un véritable véhicule pour obtenir des grandeurs de mesure concernant le comportement de roulement,
   - on vérifie en permanence si certaines conditions de déclenchement, prédéterminées (4a), c'est-à-dire des ensembles de grandeurs de mesure (2, 3) sont remplies qui correspondent à des états de fonctionnement prédéfinis du véhicule,
   - et seulement est si l'une des conditions de déclenchement (4a) est remplie, on calcule au moins une grandeur d'exploitation (Dr) qui exprime le travail de roulement du véhicule à partir d'une ou plusieurs grandeurs de mesure (2, 3) sur la base d'une fonction prédéfinie dépendant de la condition de déclenchement, et
   - on émet la grandeur d'exploitation (Dr).

2. Procédé selon la revendication 1,
   dans lequel
   on dérive la fonction de calcul de la grandeur d'exploitation (Dr) en exploitant les informations des personnes ayant fait l'essai sur le travail de roulement ou la tenue de route du véhicule, avec des moyens statistiques.

3. Procédé selon l'une quelconque des revendications 1 ou 2,
   selon lequel
   on prend comme grandeur de mesure (2, 3) une sélection faite dans le groupe suivant des grandeurs : régime du moteur (N), position du volet d'étranglement ou de la pédale d'accélération (DK), vitesse du véhicule, accélération longitudinale du véhicule (a), dépression dans la tubulure d'aspiration, température du fluide de refroidissement, instant d'allumage, quantité injectée, coefficient lambda, taux de réinjection des gaz d'échappement et température des gaz d'échappement.

4. Procédé d'analyse du comportement de roulement de véhicules automobiles ayant les étapes suivantes :

- on établit un modèle de simulation pour un véhicule donnant une image de ce véhicule dans un poste d'essai dynamique,
- on effectue des mesures sur le poste d'essai pour obtenir des grandeurs de mesure (2, 3) concernant le comportement de roulement du véhicule simulé,
- on effectue une vérification permanente pour déterminer si des conditions de déclenchement prédéterminées (4a), c'est-à-dire des ensembles de grandeurs de mesure (2, 3), sont remplies, qui correspondent à des états de conduite prédéterminés du véhicule automobile,
- et seulement si l'une des conditions de déclenchement (4a) est remplie on calcule au moins une grandeur d'exploitation (Dr) qui exprime l'état de fonctionnement du véhicule simulé à partir d'une ou plusieurs grandeurs de mesure (2, 3) suivant une fonction prédéfinie et dépendant de la condition de déclenchement,
- on émet la grandeur d'exploitation (Dr).

5. Procédé selon la revendication 4,
selon lequel
on règle un modèle de simulation pour représenter les fonctions entre les différentes grandeurs de mesure (2, 3) et notamment pour calculer la grandeur d'exploitation (Dr) à partir d'un jeu de grandeurs de mesure (2, 3) prédéterminé, qui se déterminent à la fois sur le véhicule réel et sur un poste d'essai, ainsi que le calibrage d'un poste d'essai dynamique à l'aide du modèle de simulation.

6. Procédé selon l'une quelconque des revendications 4 et 5,
**caractérisé en ce qu'**
on déduit le modèle de simulation en utilisant comme base les données concernant les valeurs calculées pour le véhicule, les grandeurs de mesure, rapportées au véhicule, étant déduites des grandeurs de mesure rapportées au moteur.

7. Procédé selon l'une quelconque des revendications 1 à 6,
dans lequel
on utilise comme grandeur d'exploitation (Dr), l'amplitude de l'oscillation de l'accélération longitudinale du véhicule (a) pour des fréquences de secousses caractéristiques.

8. Procédé selon l'une quelconque des revendications 1 à 7,
selon lequel
le calibrage du poste de contrôle dynamique comprend la détermination d'une valeur d'amortissement permettant une adaptation optimale du poste d'essai.

9. Procédé selon l'une quelconque des revendications 1 à 8,
selon lequel
l'association de la grandeur d'exploitation (Dr) se fait sur la base de programmes mathématiques et statistiques, de calculs de comparaison, de procédés de logique floue, ou encore de réseaux neuronaux.

10. Procédé selon l'une quelconque des revendications 1 à 9,
selon lequel
à partir de la quantité totale de données pour les grandeurs d'exploitation (Dr) concernant l'état de roulement dans tous les modes de fonctionnement saisis, on calcule un indice global d'exploitation de l'état de roulement avec des moyens statistiques, la pondération de l'influence des différents états de fonctionnement, pour l'indice global, dépendant du type de conducteur.

11. Dispositif pour évaluer l'état de roulement de véhicules automobiles, comprenant les éléments suivants :

- un système de mesure pour prendre des valeurs de mesure pour saisir au moins d'une des grandeurs de mesure (2, 3) concernant l'état de roulement à partir du groupe comprenant le régime du moteur (N), la position du volet d'étranglement (DK), la position de la pédale d'accélérateur, la vitesse du véhicule, l'accélération longitudinale (a) du véhicule, la dépression dans la tubulure d'aspiration, la température du fluide de refroidissement, l'instant d'allumage, la quantité injectée, le coefficient lambda, le taux de réinjection de gaz d'échappement et la température des gaz d'échappement par des capteurs électroniques,
- un système d'enregistrement de données (4) avec des conditions de déclenchement (4a), c'est-à-dire l'ensemble de plusieurs grandeurs de mesure (2, 3) ainsi que des grandeurs d'exploitation (Dr) associées aux données et concernant l'état de roulement,

- un système d'association (6) pour associer des grandeurs d'exploitation (Dr) concernant l'état de roulement du véhicule (B) aux données (2, 3) relatives à l'état de fonctionnement du moteur (A) et/ou du véhicule (B),
- une unité d'exploitation (5) pour comparer les données mesurées avec les données enregistrées ainsi que pour déterminer les grandeurs d'exploitation (Dr) concernant l'état de roulement en utilisant le système d'association (6) dans l'hypothèse où l'une des conditions de déclenchement (4a) existe, en fonction de la condition de déclenchement.

12. Dispositif selon la revendication 11,
comportant un filtre passe-bande ou un filtre de blocage de bande pour extraire des fréquences de l'accélération longitudinale du véhicule inférieures à 0,5 Hz et supérieures à environ 8 Hz, de préférence à partir de 6 Hz pour la saisie et l'exploitation des données de mesure.

13. Dispositif selon l'une quelconque des revendications 11 ou 12, comportant une installation (8) pour copier les données de mesure de véhicule (3) concernant le roulement, à partir des données de mesure (2a) rapportées au moteur.

**Fig. 1**

## Fig. 2

## Fig. 3

# Fig. 4

# Fig. 5

# Fig. 6

Fig.7

Fig.8

## Fig.9

Fig.10

# Fig.11